# EUROPEAN PATENT APPLICATION

(11) **EP 0 819 861 A2**
(43) Date of publication of application: **21.01.1998**
(21) Application number: 97305384.6
(22) Date of filing: 18.07.1997
(51) Int. Cl.: F16C 39/06

(54) **Magnetic bearing devices**

(30) Priority: 18.07.1996 JP 206457/96
(71) Applicant: SEIKO SEIKI KABUSHIKI KAISHA, Narashino-shi Chiba (JP)
(72) Inventor: Yamauchi, Akira, Narashino-shi, Chiba (JP)
(74) Representative: Sturt, Clifford Mark

(57) **Abstract**

To provide magnetic bearing devices capable of preventing undesirable consequences caused by conical motion or parallel motion of a rotor which is liable to occur during acceleration of the rotor.

A three-axis-controlled magnetic bearing is equipped with a radial sensor 22 for detecting the radial position of a lower portion of a rotor 2, or the portion lower than its center of gravity, in addition to a radial sensor 8 which is mounted at a higher position than the center of gravity of the rotor 2. A phase difference comparison circuit 24 calculates a phase difference between position signals detected by the radial sensor 8 and the radial sensor 22. A parallel mode compensating circuit 26 or a conical mode compensating circuit 28 is selectively connected depending on the amount of the phase difference. A resultant compensation signal controls a radial electromagnet 4 via a current amplifier 12.

## Description

The present invention relates to magnetic bearing devices.

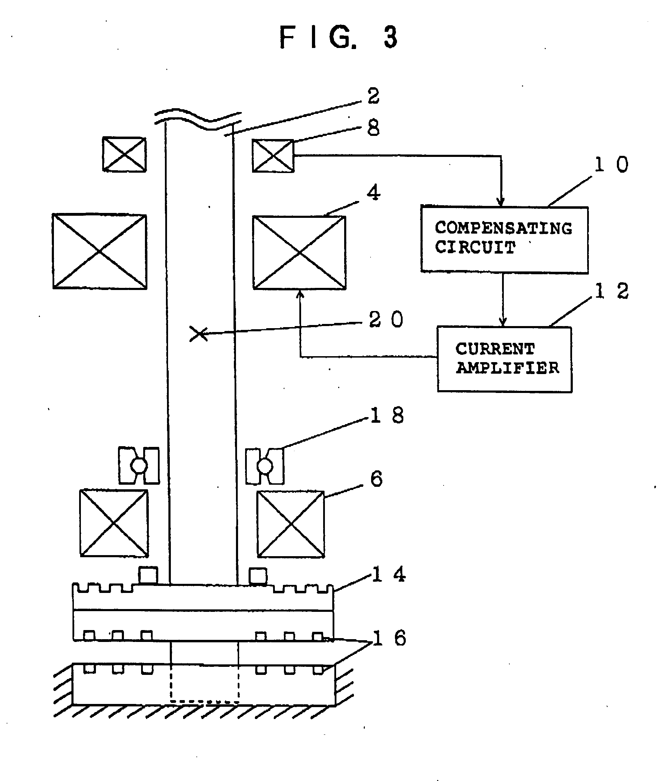

Fig. 3 shows a general constructional diagram of a turbomolecular pump provided with a conventional three-axis-controlled magnetic bearing. The three-axis-controlled magnetic bearing employs a radial electromagnet 4 and an axial electromagnet 6 to keep a rotor 2 lifted by magnetic force. Radial position control of the rotor 2 is made actively, in which a radial sensor 8 detects the position of the rotor 2, resultant position data is passed through a PID control circuit 10 (PID stands for Proportional Integral Derivation: see for example K. J. Åström and T. Hägglund: PID Controllers; Theory, Design, and Tuning, 2nd Edition, Instrument Society of America), and then the radial electromagnet 4 is driven after current amplification by a current amplifier 12. It is understood from the foregoing that the position control of the rotor 2 is carried out based simply on its displacements detected by the radial sensor 8. Since the radial sensor is mounted at a higher position than the centre of gravity (not shown) of the rotor 2, it monitors displacements of an upper portion of the rotor 2. On the other hand, displacements of a lower portion of the rotor 2, or the portion lower than its center of gravity, are passively controlled by the axial electromagnet 6, an armature 14 and permanent magnets 16. Therefore, the lower portion of the rotor 2 can produce large deflecting motion which can cause the lower portion to go into contact with a touch-down bearing 18 when the rotor 2 is accelerated and its revolving speed reaches a resonant point which is characteristic of the turbomolecular pump. This deflecting motion involves simultaneous conical motions of both the upper and lower portions of the rotor 2 about its center of gravity. This phenomenon can cause wear of the bearing or temporary vibration. While the resonant point of this kind tends to vary depending on the revolving speed of the rotor 2, such deflecting motion is generally divided into motions in two directions according to the revolving speed, in which the motions in the two directions occur around a common stationary point. These motions are backward turning motion (precession) directed opposite to the revolving direction and forward turning motion (nutation) directed in the same direction as the revolving direction. There are two conical mode resonant points. These are the point where resonance due to precession coincides with the revolving speed of the rotor 2 and the point where resonance due to nutation coincides with the revolving speed of the rotor 2. Besides these conical mode resonances, the turbomolecular pump can occasionally produce parallel mode resonance due to translational motion of the rotor 2, and this parallel mode resonance can also cause the rotor 2 to go into contact with the touch-down bearing 18 or temporary vibration to occur. In actuality, the conical mode resonance and parallel mode resonance occur simultaneously and they are combined in a complex manner in many cases. A conventional technique for avoiding inconvenience which can occur due to such conical mode and parallel mode resonances is to adjust a PID constant of the PID control circuit 10.

However, the conventional technique using the PID control circuit 10 provides overall control based on adjustment of a single PID constant to deal with both the conical mode resonance and the parallel mode resonance which have different characteristics. This form of overall control could have been a compromise solution to resonance in the two different modes. The upper portion of the rotor 2, or the portion higher than its center of gravity, is controlled without monitoring its lower portion. A central position 20 of the conical motions moves depending on the revolving speed of the rotor 2, however. Accordingly, if this central position 20 shifts upward, the lower portion of the rotor 2 tends to produce large deflecting motion even when deflecting motion of the upper portion is small. While the influence of the two conical motions is significant at natural resonant points of the rotor 2, a similar phenomenon can occur at other than the natural resonant points depending on the degree of geometrical unbalance and where such unbalance exists.

### SUMMARY OF THE INVENTION

The invention has been made in the light of the aforementioned problems of prior art technology, and it is an object of the invention to provide magnetic bearing devices capable of preventing undesirable consequences caused by conical motion or parallel motion of a rotor which is liable to occur during acceleration of the rotor.

In a general aspect, the invention provides a magnetic bearing device comprising first and second radial sensors mounted for sensing displacement of a rotor and being mounted on opposite sides of the centre of gravity of the rotor;
phase difference comparison means for calculating a phase difference based on a comparison between signals detected by said first radial sensor and said second radial sensor;
compensating signal calculating means for providing a parallel mode compensation signal whose value depends upon the phase difference obtained by said phase difference comparison means and a conical mode compensation signal whose value depends upon the phase difference obtained by said phase difference comparison means; and
means responsive to the parallel mode compensation signal and the conical mode compensation signal for providing an output signal to a radial electromagnet for controlling the position of said rotor in its radial direction.

In one aspect of the invention, there is provided a first radial sensor mounted closer to an intake port than the center of gravity of a rotor, a second radial sensor mounted opposite to the first radial sensor with the center of gravity of the rotor in between, phase difference comparison means for calculating a phase difference based on a comparison between signals detected by the first radial sensor and the second radial sensor, compensation signal calculating means which outputs a parallel mode compensation signal when the phase difference obtained by the phase difference comparison means is smaller than a specified value, a conical mode compensation signal when the phase difference obtained by the phase difference comparison means is equal to or greater than the specified value, amplification means for amplifying the parallel mode compensation signal or the conical mode compensation signal, whichever applicable, and a radial electromagnet for controlling the position of the rotor in its radial direction based on an output of the amplification means, wherein the radial electromagnet is mounted closer to the intake port than the center of gravity of the rotor.

In another aspect of the invention, there is provided a first radial sensor mounted closer to an intake port than the center of gravity of a rotor, a second radial sensor mounted opposite to the first radial sensor with the center of gravity of the rotor in between, phase difference comparison means for calculating a phase difference based on a comparison between signals detected by the first radial sensor and the second radial sensor, compensation signal calculating means which adjusts by a ratio a parallel mode compensation signal and a conical mode compensation signal in accordance with the amount of the phase difference obtained by the phase difference comparison means and then adds together thus adjusted compensation signals, amplification means for amplifying an output of the compensation signal calculating means, and a radial electromagnet for controlling the position of the rotor in its radial direction based on an output of the amplification means, wherein the radial electromagnet is mounted closer to the intake port than the center of gravity of the rotor.

In a further aspect of the invention, there is provided gain control means between the compensation signal calculating means and the amplification means for limiting the output of the compensation signal calculating means to a specified value when an amplitude detected by the second radial sensor exceeds a set value.

In a still further aspect of the invention (claim 4), there is provided gain control means between the compensation signal calculating means and the amplification means which amplifies or attenuates the output of the compensation signal calculating means and/or decelerates the rotor when an amplitude detected by the second radial sensor exceeds a set value for a specific period of time.

### BRIEF DESCRIPTION OF THE DRAWINGS

FIG. 1 is a constructional diagram of a first embodiment of the invention;
FIG. 2 is a constructional diagram of a second embodiment of the invention; and
FIG. 3 is a general constructional diagram of a turbomolecular pump provided with a conventional three-axis-controlled magnetic bearing.

### DETAILED DESCRIPTION OF THE PREFERRED EMBODIMENTS

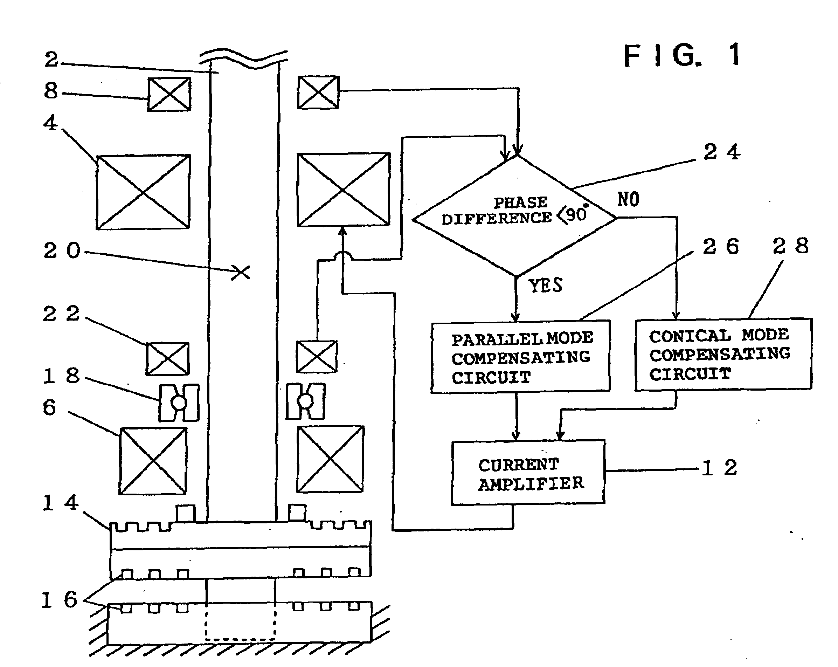

Embodiments of this invention are now described below with reference to the attached drawings. FIG. 1 shows a first embodiment of the invention, in which elements identical to those depicted in FIG. 3 are designated by the same reference numerals and a description of such elements is omitted here.

Referring to FIG. 1, a three-axis-controlled magnetic bearing for a turbomolecular pump having an intake port at the top of the Figure (not shown) is equipped with a radial sensor 22 for detecting the radial position of a lower portion of a rotor 2, or the portion lower than its center of gravity, in addition to a radial sensor 8 which is mounted at a higher position than the center of gravity of the rotor 2. A phase difference comparison circuit 24 is for calculating a phase difference between position signals detected by the radial sensor 8 and the radial sensor 22, and corresponds to phase difference comparison means. An output of the phase difference comparison circuit 24 is entered to a parallel mode compensating circuit 26 for compensating for parallel motion of the rotor 2 or to a conical mode compensating circuit 28 for compensating for conical motion. A combination of the parallel mode compensating for conical motion. A combination of the parallel mode compensating circuit 26 and the conical mode compensating circuit 28 corresponds to compensation signal calculating means. Outputs of the parallel mode compensating circuit 26 and the conical mode compensating circuit 28 are entered to a radial electromagnet 4 via a current amplifier 12 which corresponds to amplification means.

Now , an operational description is given below.

The position signals detected by the radial sensor 8 and the radial sensor 22 are entered to the phase difference comparison circuit 24, and the phase difference between the two position signals is calculated. If the phase difference is 0 degrees or above but less than 90 degrees (YES), it is judged that the rotor 2 is producing parallel motion and the parallel mode compensating circuit 26 outputs a signal calculated based on a predefined PID constant. If the phase difference is from 90 degrees to 180 degrees(NO), it is judged that the rotor 2 is producing conical motion and the conical mode compensating circuit 28 outputs a signal calculated based on a predefined PID constant. It is possible to individually set gain margins and phase margins of the parallel mode compensating circuit 26 and the conical mode compensating circuit 28 in such a way that design specifications are fully satisfied. The output signal of the parallel mode compensating circuit 26 or the conical mode compensating circuit 28 is amplified by the current amplifier 12 for an increase current flow and delivered to the radial electromagnet 4 to drive it. Consequently, it is possible to exercise optimum control over conical motion and parallel motion of the rotor 2. Although a boundary value for the phase difference is set to 90 degrees in this embodiment, it is not necessarily limited to 90 degrees. The boundary value may be defined on a trial-and-error basis so that the conical motion and parallel motion can be efficiently suppressed. While such conical motion and parallel motion are likely to occur chiefly during acceleration of the rotor, this is not always the case. Similar control is possible during normal running conditions as well (in a case where conical motion or parallel motion occurs as a result of excessive geometrical unbalance of the rotor 2, for example, as previously mentioned).

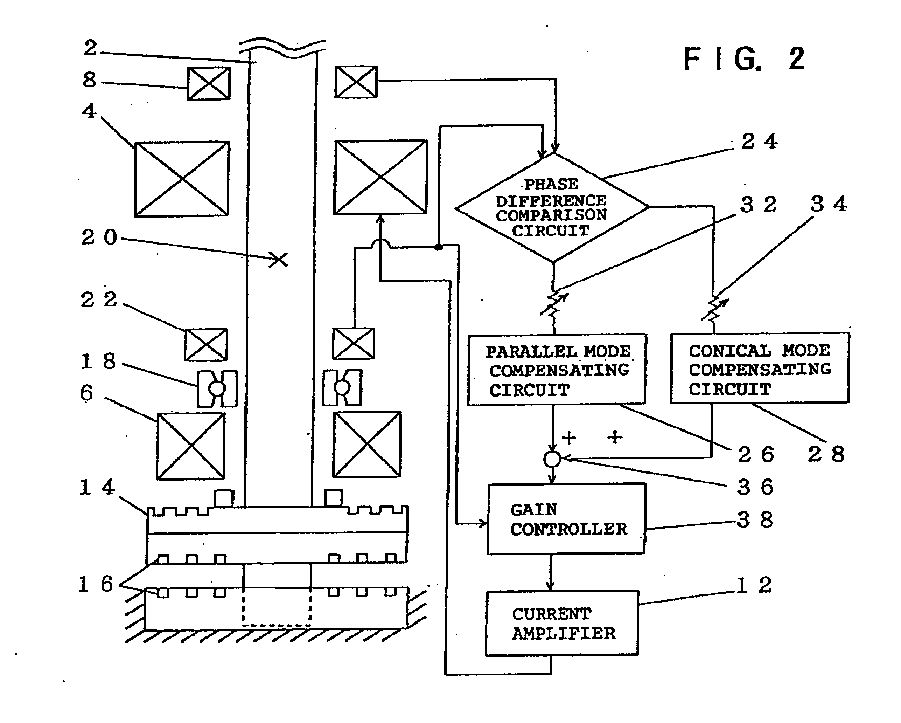

A second embodiment of the invention is described below. FIG. 2 shows the second embodiment of the invention, in which elements identical to those depicted in FIGS. 1 and 3 are designated by the same reference numerals and a description of such elements is omitted here.

Referring to FIG. 2, there are provided a blind controller 32 and a blind controller 34 for ratio control between a phase difference comparison circuit 24 and a parallel mode compensating circuit 26 and between the phase difference comparison circuit 24 and a conical mode compensating circuit 28, respectively. Outputs of the parallel mode compensating circuit 26 and the conical mode compensating circuit 28 are entered to an adder 36, in which output signals are added together. A combination of the blind controller 32, the blind controller 34, the parallel mode compensating circuit 26, conical mode compensating circuit 28 and the adder 36 corresponds to compensation signal calculating means. A gain controller 38 is for exercising gain control upon receiving the outputs of the parallel mode compensating circuit 26 and the conical mode compensating circuit 28, and corresponds to gain control means. An output signal of the gain controller 38 is entered to a current amplifier 12.

Now, an operational description is given below.

The phase difference comparison circuit 24 calculates a phase difference between position signals detected by the radial sensor 8 and the radial sensor 22. Then, ratios for the blind controller 32 and the blind controller 34 are set based on the calculated phase difference. These ratios are set because it is usually impossible to clearly distinguish conical motion and parallel motion from each other, and both of these motions coexist in most cases. When the phase difference is 180 degrees, for example, it is assumed that there exists only conical motion. In this case, the ratio for the blind controller 32 is set to 0 while the ratio for the blind controller 34 is set to 1. Contrarily, when the phase difference is 0 degrees, it is assumed that only parallel motion is present. Accordingly, the ratio for the blind controller 32 is set to 1 while the ratio for the blind controller 34 is set to 0. When the phase difference is 90 degrees, it is assumed that conical motion and parallel motion are equally present so that the ratio for the blind controller 32 and that for the blind controller 34 are both set to 0.5. The ratios are set in this way, in which set values may be taken either stepwise or continuously within a permissible range. If only a two-step choice of ratio 1 or 0 is allowed, this embodiment will provide virtually the same function as the first embodiment. The output signals of the parallel mode compensating circuit 26 and the conical mode compensating circuit 28 are added together by the adder 36 and an output of the adder 36 is delivered to the gain controller 38. Also entered to the gain controller 38 is the position signal sent from a radial sensor 22, whereby deflecting motion of a lower portion of a rotor 2, or the portion lower than its center of gravity, is monitored. The reason why the gain controller 38 monitors deflecting motion of the lower portion is that if a central position 20 of conical motion shifts upward due to a change in revolving speed, the lower portion of the rotor 2 will produce large deflecting motion even when deflecting motion of its upper portion is small. To prevent the rotor 2 from going into contact with a touch-down bearing 18 in such an event, the output of the adder 36 is so controlled that it does not exceed a specified value when the deflecting motion of the lower portion has become larger than a predefined value. An example of an alternative approach is such that the output of the adder 36 is amplified or attenuated if a measured period of time during which the deflecting motion exceeds a predefined value reaches a preset time period (e.g., one second), and the rotor is decelerated when another preset time period (e.g., two seconds) has further elapsed. This arrangement makes it possible to effectively suppress resonance involving both parallel motion and conical motion by only controlling a radial electromagnet 4 while preventing an increase in deflecting motion of the lower portion.

As described above, one construction of this invention (claim 1) is such that there is provided the second radial sensor in addition to the first radial sensor, and the parallel mode compensation signal or the conical mode compensation signal is selectively output in accordance with the phase difference between the detected signals. This arrangement makes it possible to separate parallel mode and conical mode resonances, control the position of the rotor in its radial direction in a manner suited to resonance of each mode, and eventually improve the performance of a magnetic bearing device.

Another construction of the invention (claim 2) is such that there is provided the second radial sensor in addition to the first radial sensor, the parallel mode compensation signal and the conical mode compensation signal are individually multiplied by set ratios in accordance with the phase difference between the detected signals, and then both of the compensation signals are added together. This arrangement makes it possible to control the position of the rotor in its radial direction in accordance with a mixture ratio of parallel mode and conical mode resonances should they coexist, and further improve the performance of the magnetic bearing device.

In a further construction of the invention (claim 3), there is provided the gain control means between the compensation signal calculating means and the amplification means for limiting the output to a specified value. This arrangement makes it possible to prevent the lower portion of the rotor from exceeding a set value of deflecting motion.

In a still further construction of the invention (claim 4), there is provided the gain control means between the compensation signal calculating means and the amplification means which amplifies or attenuates the output and decelerates the rotor. This arrangement makes it possible to prevent the lower portion of the rotor from exceeding a set value of deflecting motion.

## Claims

1. A magnetic bearing device comprising:
first and second radial sensors (8, 22) mounted for sensing displacement of a rotor and being mounted on opposite sides of the center of gravity of the rotor;
phase difference comparison means (24) for calculating a phase difference based on a comparison between signals detected by said first radial sensor and said second radial sensor;
compensation signal calculating means (26, 28) for providing a parallel mode compensation signal whose value depends upon the phase difference obtained by said phase difference comparison means and a conical mode compensation signal whose value depends upon the phase difference obtained by said phase difference comparison means; and
means (12) responsive to the parallel mode compensation signal and the conical mode compensation signal for providing an output signal to a radial electromagnet (4) for controlling the position of said rotor in its radial direction.

2. A bearing device according to claim 1, wherein said compensation signal calculating means provides a parallel mode compensation signal when the phase difference obtained by said phase difference comparison means is smaller than a specified value, and a conical mode compensation signal when the phase difference obtained by said phase difference comparison means is equal to or greater than the specified value.

3. A bearing device according to claim 1, wherein said compensation signal calculating means adjusts by a ratio (32, 34) a parallel mode compensation signal and a conical mode compensation signal in accordance with the amount of the phase difference

4. A bearing device according to any preceding claim including gain control means (38) coupled to the output of said compensation signal calculating means for limiting the output of said compensation signal calculating means to a specified value when an amplitude detected by said second radial sensor exceeds a set value.

5. A bearing device according to any preceding claim, comprising gain control means (38) between said compensation signal calculating means and amplification means (12) to amplify or attenuate the output of said compensation signal calculating means and/or decelerates said rotor when an amplitude detected by said second radial sensor exceeds a set value for a specific period of time.

6. A magnetic hearing device according to any preceding claim incorporated in a turbomolecular pump, wherein said radial electromagnet is mounted closer to the intake port than the center of gravity of said rotor.
